(19) Europäisches Patentamt
European Patent Office
Office européen des brevets

(11) EP 2 291 636 B1

(12) **FASCICULE DE BREVET EUROPEEN**

(45) Date de publication et mention
de la délivrance du brevet:
**20.12.2017 Bulletin 2017/51**

(21) Numéro de dépôt: **09784434.4**

(22) Date de dépôt: **25.06.2009**

(51) Int Cl.:
***G01N 15/14*** *(2006.01)* ***G01N 15/12*** *(2006.01)*

(86) Numéro de dépôt international:
**PCT/FR2009/051216**

(87) Numéro de publication internationale:
**WO 2010/004173 (14.01.2010 Gazette 2010/02)**

(54) **DISPOSITIF ET PROCÉDÉ DE MESURE ÉLECTRO-OPTIQUE DESTINÉS À LA CLASSIFICATION ET AU COMPTAGE D'ÉLÉMENTS MICROSCOPIQUES**

ELEKTRO-OPTISCHE MESSVORRICHTUNG UND VERFAHREN ZUR KLASSIFIZIERUNG UND ZÄHLUNG MIKROSKOPISCHER ELEMENTE

ELECTRO-OPTIC MEASUREMENT DEVICE AND METHOD INTENDED FOR CLASSIFYING AND COUNTING MICROSCOPIC ELEMENTS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **25.06.2008 FR 0854229**

(43) Date de publication de la demande:
**09.03.2011 Bulletin 2011/10**

(73) Titulaire: **HORIBA ABX SAS**
**34000 Montpellier (FR)**

(72) Inventeurs:
• **MERCHEZ, Benoît**
**F-34230 Le Pouget (FR)**
• **BRUNEL, Patrick**
**F-34920 Le Cres (FR)**
• **NERIN, Philippe**
**F-30114 Nages (FR)**

(74) Mandataire: **Boura, Olivier et al**
**Cabinet Beau de Loménie**
**232, avenue du Prado**
**13008 Marseille (FR)**

(56) Documents cités:
| | |
|---|---|
| EP-A- 0 425 381 | EP-A- 0 856 735 |
| EP-A- 1 431 745 | WO-A-2006/086382 |
| WO-A2-2005/017499 | FR-A- 2 873 813 |
| GB-A- 2 125 181 | US-A- 3 710 933 |
| US-A1- 2006 004 530 | US-A1- 2006 219 873 |
| US-B1- 6 524 858 | |

EP 2 291 636 B1

## Description

<u>Arrière-plan de l'invention</u>

La présente invention se situe dans le domaine de l'analyse biologique, en particulier dans le domaine de l'analyse hématologique. L'invention se rapporte au domaine général des dispositifs et procédés de mesures électro optiques dans un fluide présent dans une cuve de mesure. De tels dispositifs et procédés étant en particulier destinés à la classification et au comptage d'objets microscopiques dans un fluide, par exemple biologique.

Plus précisément, l'invention concerne les dispositifs basés sur l'utilisation de méthodes d'analyse fondées sur l'utilisation de mesures électriques et optiques pour compter et différencier les cellules présentes dans un échantillon à analyser. Dans le cas de l'invention ci-dessous, cet échantillon est préférentiellement un échantillon sanguin.

Dans le cas des cellules hématopoïétiques, l'homme de l'art sait que l'analyse morphologique de la cellule, obtenue par volumétrie ou diffractométrie, incluant les phénomènes d'extinction ou d'absorption, permet la discrimination des principales lignées cellulaires incluant les érythrocytes ou globules rouges, les thrombocytes ou plaquettes et les leucocytes ou globules blancs. Cette dernière population est elle-même subdivisée en plusieurs catégories telles que les lymphocytes, les monocytes, les neutrophiles, les éosinophiles et les basophiles.

On peut, dans une certaine mesure, apprécier le niveau de maturité de ces cellules en déterminant simultanément leur volume et leur absorption apparente en lumière blanche tel que décrit dans le brevet US 5,138,181 déposé par la Demanderesse. Un dispositif développé dans un mode de réalisation en lumière quasi monochromatique est par exemple décrit dans le brevet WO 2006/053960.

Cette appréciation de la maturité cellulaire est très importante car elle permet de réaliser des diagnostics précoces. De façon générale, seules les cellules matures sont présentes en majorité dans le sang circulant.

Pour chacun des types cellulaires cités plus haut, on connaît les différents niveaux de maturation. Ainsi, les globules rouges, encore appelés érythrocytes, ou hématies, sont d'abord fabriqués sous forme de proérythroblastes, puis d'érythroblastes basophiles, puis encore d'érythroblastes polychromatophiles, qui évoluent en érythroblastes acidophiles, puis en réticulocytes. Ce sont ces réticulocytes qui, enfin, se différencient en érythrocytes, une fois passé dans le sang circulant.

Les globules blancs (ou leucocytes) sont également d'abord fabriqués au niveau de la moelle osseuse sous la forme préalable de myéloblaste. Ce myéloblaste donnera ensuite le pro-granulocyte qui se transformera alors en granulocyte basophile, éosinophile ou neutrophile, d'abord non segmenté puis dont le noyau va de plus en plus se segmenter au fur et à mesure de son âge.

Ce même myéloblaste est également à l'origine de la lignée monocytaire qui donnera le monoblaste, le promonocyte puis le monocyte qui passera dans le sang périphérique.

La cellule souche pluripotente dont est originaire le myéloblaste, donne également naissance à la lignée lymphocytaire par une différenciation sous forme de cellule souche lymphoïde dont une partie de sa lignée ira continuer sa maturation dans le thymus et les ganglions (lignée T) et l'autre restera dans la moelle osseuse afin de donner la lignée des lymphocytes B. Ces mêmes lymphocytes B qui, une fois activés sous la forme de plasmocytes, produisent les anticorps pour combattre les antigènes pathogènes.

Les plaquettes sanguines, ou thrombocytes, proviennent, quant à elles, des mégacaryoblastes, -eux mêmes issus du progéniteur myéloïde dont est originaire le myéloblaste- qui, une fois arrivé au stade ultime de leur maturation (mégacaryocyte thrombocytogène) produisent des plaquettes par délitement de leur cytoplasme. Les plaquettes jeunes (plaquettes réticulées) contiennent une charge en ARN qui est le reliquat de leur cellule d'origine.

Le diagnostic de certaines pathologies nécessite la numération de plus en plus fine des cellules hématopoïétiques. En particulier, il devient nécessaire de pouvoir mettre en évidence de nouvelles populations telles que les réticulocytes et les érythroblastes qui sont les versions immatures des érythrocytes. De même, la mise en évidence de cellules immatures, précurseurs des leucocytes, appelés lymphocytes, monocytes ou granulocytes immatures revêt une grande importance. De même, la classification et le comptage des lymphocytes activés ou encore des plaquettes réticulées permettrait d'améliorer véritablement le diagnostic des patients.

La durée de vie moyenne d'un globule rouge étant de 120 jours, le taux de régénération normal doit donc être de 0,83 %. Le pourcentage moyen normal généralement accepté est entre 0,5 et 1,5 %, ces valeurs étant plus élevées chez le nourrisson de moins de 3 semaines (de 2 à 6%). L'observation et la numération des réticulocytes sont donc un indicateur de l'activité érythropoïétique et ainsi un paramètre particulièrement utile notamment dans le suivi de la reprise médullaire après une chimiothérapie, dans le suivi de traitement par érythropoïétine recombinante (rHuEpo), dans le bilan exploratoire d'une anémie ou encore dans la recherche d'une hémolyse ou hémorragie compensée.

Dans la suite sont données quelques pathologies où une telle différenciation et énumération des cellules sont utiles.

L'intérêt clinique de la numération des érythroblastes peut, par exemple, s'avérer important pour la détection de certaines anémies. La caractéristique commune des anémies hémolytiques est l'excès de destruction des hématies adultes pouvant résulter de facteurs extracorpusculaires ou d'anomalies intrasèques de la structure ou de la fonction des hématies.

L'érythroleucémie est une variété de leucémie aiguë myélo-blastique qui se caractérise par une prolifération maligne des cellules de la lignée rouge et des précurseurs de la lignée granuleuse. Du point de vue cytologique, on note au stade initial une hyperleucocytose périphérique avec présence de blastes circulants (59%). La myélémie correspond au passage dans le sang circulant d'éléments immatures soit de la lignée granuleuse, soit de la lignée érythrocytaire.

Au sujet de la différenciation, l'une des familles de cellules les plus intéressantes à mettre en évidence sont les réticulocytes, et de nombreuses méthodes existent et sont développées dans les automates d'analyse en hématologie. La numération de ces lignées cellulaires peut être réalisée selon un mode de marquage des acides nucléiques à l'aide de colorants fluorescents, par l'exemple les cyanines asymétriques, et en particulier le Thiazole Orange.

Cette molécule présente des caractéristiques physico-chimiques uniques qui présentent un intérêt pour la détection intra cytoplasmique d'acides nucléiques, ARN ou ADN. Libre en solution cette molécule présente très peu de fluorescence induite par photo excitation. La configuration stéréochimique du thiazole orange est telle que cette molécule s'intercale entre les bases des acides nucléiques. Dans cet état, la molécule fluoresce. Ainsi, la détection et la mesure du niveau de fluorescence permet la quantification d'acides nucléiques intra cytoplasmiques. De cette quantification en acides nucléiques intracytoplasmiques, couplée à une seconde mesure optique ou électrique, peut être déduit la nature des cellules permettant ainsi leur numération absolue ou relative.

Les dispositifs électro-optiques existant pour mesurer cette fluorescence sont relativement complexes. Ils utilisent des ressources matérielles importantes notamment lorsque les cadences d'analyse attendues sont élevées. Dans ce cas, il est assez classique d'utiliser une source de lumière du type laser avec un ensemble de détecteurs permettant la mesure de signaux de diffraction, généralement identifiée sous les acronymes FSC (pour « Forward Scattering » en anglais) et SCC (pour « Side SCattering » en anglais), ou encore d'extinction, généralement identifié sous l'acronyme ALL (pour « Axial Light Loss » en anglais).

Ce même laser permet d'induire la fluorescence du ou des marqueurs ou colorants présents sur ou dans la cellule au moment de la traversée du faisceau laser. Classiquement, les lumières de fluorescence et de diffraction sont séparées sur la base de leur propriétés spectrales. Pour ce faire, on utilise généralement des filtres optiques interférentiels du type multidiélectriques, c'est-à-dire des filtres obtenus par le dépôt alterné de deux ou plusieurs matériaux transparents ayant des indices de réfraction distincts. Pour la mesure de la fluorescence, on utilise la plupart du temps des photomultiplicateurs ou des photodiodes opérant en mode d'avalanche. Ces systèmes sont assez complexes d'un point de vue optique et mécanique.

La demande de brevet US 2006/0219873 décrit l'utilisation d'une photodiode à avalanche à gain automatique (AGC Automatic Gain Control). Ce dispositif est utilisé dans un cytomètre en flux où le gain de la photodiode est ajusté automatiquement en fonction de la tension appliquée.

La demande de brevet EP 1 710 558 déposée par Sysmex présente plusieurs détecteurs pour récupérer les données de chaque source de lumière. Par ailleurs, ce dispositif ne prend des mesures qu'en SSC uniquement.

La demande de brevet EP 0 533 333 décrit un dispositif de lecture en ligne dans lequel les cellules ne sont pas analysées en flux. Ici encore, même si plusieurs données peuvent être obtenues, absorption, fluorescence, réflectance, elles ne le sont pas avec un seul détecteur.

La demande de brevet WO 2008/019448 présente un dispositif en épi-fluorescence sans lecture en absorption.

La demande de brevet EP 0 806 664 utilise plusieurs détecteurs dès lors que l'on souhaite obtenir des données provenant de plusieurs sources différentes.

Le brevet US 4, 745, 285 décrit un dispositif capable de compter des particules marquées avec plusieurs fluorochromes. Ce dispositif possède une source de lumière à une seule longueur d'onde et plusieurs détecteurs capables de récupérer les données de chaque fluorescence.

Le brevet US 5, 408, 307 décrit un dispositif apte à faire des mesures en FSC, SSC et en fluorescence en utilisant plusieurs détecteurs différents.

Le brevet US 6, 897, 954 de la société Becton Dickinson and Cie, décrit l'utilisation de plusieurs fluorescences associées à plusieurs photodétecteurs pour compter des cellules en flux. Chaque photodétecteur peut être modulé par le gain, afin d'être ajusté à la fluorescence détectée. Le brevet WO2006/086382 A2 décrit un dispositif de détection d'aérosols basé sur la fluorescence et utilisant plusieurs filtres associés à un même détecteur pour détecter successivement les énergies de fluorescence. Aucun des dispositifs connus ne réalise une intégration des systèmes de mesure électro-optique et opto-fluidique nécessaires à la différentiation et à la numération de cellules biologiques, notamment celles du sang circulant. La taille et la complexité des dispositifs existants les rendent couteux et complexes à manipuler.

Objet et résumé de l'invention

La présente invention a donc pour but principal de pallier de tels inconvénients en proposant un dispositif d'analyse biologique par mesures électro optiques dans un fluide présent dans une cuve de mesure selon la revendication 1, ce dispositif comprenant au moins deux sources lumineuses aptes à émettre dans des zones spectrales différentes convenant pour la réalisation de mesures, respectivement, d'absorption et de fluorescence, un dispositif de mesure d'impédance associé à chaque mesure d'absorption et de fluorescence, et un dispositif de détection unique, comprenant un détecteur, un système optique et des moyens de filtrages, ces trois derniers éléments étant mutualisés pour permettre la mesure des signaux d'absorption et/ou de fluorescence, le détecteur étant configurable en gain interne afin de permettre la réalisation des mesures de fluorescence et des mesures d'absorption de manière séquentielle. L'invention concerne aussi un procédé d'utilisation selon la revendication 14. La configuration du montage est telle que la fluorescence est collectée par l'optique et le détecteur également destinés à la mesure d'absorption. Cette approche permet d'aboutir à un niveau d'intégration optimal caractéristique de l'invention. Une réduction des coûts de réalisation et une facilité de mise en oeuvre est un avantage de cette invention.

Avec un tel dispositif, chaque cellule peut être mesurée en « double mesure », à savoir une mesure en absorbance et/ou en fluorescence, d'une part et une mesure de résistivité d'autre part. En effet, dans les deux cas, une mesure de résistivité est associée afin d'obtenir des informations volumétriques.

L'absorption apparente fait intervenir dans une large mesure les phénomènes de réfringence/diffraction cellulaire. Cet ensemble de mesures permet d'obtenir suffisamment de données fiables pour obtenir des résultats sensibles et spécifiques sur l'ensemble des populations cellulaires.

L'invention propose un agencement optique original et simplifié permettant la lecture d'une suspension cellulaire préparée préalablement chimiquement à l'aide de réactifs ayant une fonction spécifique. Les suspensions cellulaires ainsi obtenues sont analysées séquentiellement, à l'aide d'une lecture volumétrie-absorption et d'une mesure volumétrie-fluorescence, c'est à dire à l'aide d'une mesure électro-optique à deux paramètres réalisée avec le même dispositif de détection.

Cette double mesure constitue une simplification importante des ressources matérielles. Le dispositif tel que défini par l'invention permet ainsi par exemple la classification et le comptage des éléments suivants : les plaquettes, globules rouges, lymphocytes, monocytes, neutrophiles, éosinophiles, basophiles, réticulocytes, érythroblastes, plaquettes réticulées, lymphocytes immatures, monocytes immatures, granulocytes immatures, lymphocytes activés et neutrophiles non segmentés.

Dans un mode de réalisation, le détecteur est une photodiode à effet d'avalanche connectée à un circuit de polarisation apte à inhiber le gain interne d'avalanche.

L'utilisation d'une simple photodiode à effet d'avalanche, utilisée dans un contexte de polarisation particulier et original à l'invention, permet une réalisation simple, peu coûteuse et efficace de l'invention.

Dans une implémentation avantageuse, le gain interne inhibé est unitaire, la photodiode à effet d'avalanche se comportant alors comme une simple photodiode.

Cette implémentation permet de réduire le comportement de la photodiode à effet d'avalanche au comportement d'une photodiode classique telle qu'utilisée classiquement pour les mesures d'absorption. En l'absence de l'inhibition de gain prévue selon l'invention, la photodiode à effet d'avalanche saturerait dès lors qu'elle serait utilisée pour une mesure d'absorption où l'intensité lumineuse est élevée.

Selon un mode de réalisation, le circuit de polarisation comprend un commutateur à deux positions sur lesquelles sont fournies deux tensions distinctes, une haute et une basse, et commandé par une commande digitale afin de fournir la haute tension ou la basse tension pour la polarisation de la photodiode.

En mettant en oeuvre une simple commande de commutateur, cette réalisation offre une grande robustesse de fonctionnement. La diode est successivement polarisée avec une haute ou une basse tension en fonction de la position du commutateur. Le gain interne, et donc la sensibilité du récepteur, est alors modifiée.

Selon un autre mode de réalisation, le circuit de polarisation comprend un générateur de tension programmable ou commandé par une commande de type numérique ou analogique pour contrôler la tension de polarisation appliquée par ce générateur à la photodiode à effet d'avalanche.

Cette autre réalisation permet l'utilisation d'un unique générateur de tension.

Selon une caractéristique particulière de l'invention, les deux sources de lumière présentent des axes optiques d'émission coplanaires avec l'axe optique du détecteur de lumière.

En absorption, le dispositif optique réalise la conjugaison de trois plans, le plan de la pupille d'émission, le plan de passage des cellules, le plan de la pupille de réception. L'éclairage est donc du type Newtonien. L'optique est ici corrigée des aberrations du troisième ordre, notamment pour corriger les aberrations géométriques et chromatiques introduites par les dioptres plans, d'eau et de verre, de la chambre de mesure. L'ensemble des trajets optiques significatifs pour les mesures sont alors coplanaires.

Selon une caractéristique avantageuse, l'axe optique de la source de lumière émettant aux longueurs d'onde d'absorption est aligné avec celui du détecteur de lumière et l'axe optique de la source de lumière d'excitation de la fluorescence est perpendiculaire aux axes optiques du détecteur et de l'autre source de lumière.

Cette caractéristique permet un bon comportement du dispositif de détection pour l'absorption et pour la fluorescence. Pour l'absorption on assure que le dispositif de détection est bien situé face à la source de lumière. Pour la fluorescence, en plaçant la source perpendiculaire au dispositif de détection, on évite que la lumière d'émission ne gêne la mesure de fluorescence qui présente une intensité moindre.

Selon une autre caractéristique particulière de l'invention, le marqueur utilisé pour la fluorescence étant le Thiazole Orange, la source d'excitation de la fluorescence doit émettre autour de 470 nm et les moyens de filtrage du dispositif de détection doivent comprendre un filtre coloré coupant à 495 nm.

L'utilisation du Thiazole Orange est connue pour être avantageuse pour discriminer plusieurs populations cellulaires. Dans le cadre de l'invention, son utilisation autorise l'usage d'un filtre peu couteux du type verre coloré. Un tel filtre bon marché n'est disponible que pour certains types de bandes passantes. Il se trouve en effet que le Thiazole Orange présente encore une efficacité même excité en dessous de son maximum secondaire d'excitation situé à 488 nm. Il a ainsi été découvert par les inventeurs que la combinaison d'une excitation du Thiazole Orange à une longueur d'onde située autour de 470 nm avec l'utilisation d'un filtre du type verre coloré disponible à faible cout, permettait de faire une mesure de fluorescence quantificative tout à fait pertinente, c'est-à-dire sensible et spécifique, avec une photodiode à effet d'avalanche ou un détecteur à gain interne élevé. Cette découverte est utilisée de manière particulière dans l'invention où, en plus, il est rendu possible de faire une mesure d'absorption avec la diode à effet d'avalanche.

Avantageusement, le détecteur est relié à un étage d'amplification électronique à gain électronique variable en fonction de la mesure effectuée.

L'utilisation d'un étage électronique d'amplification ajoute une possibilité d'améliorer la quantification d'intensité lumineuse en maximisant l'exploitation de la plage dynamique disponible pour traiter ultérieurement les données.

Selon une caractéristique applicative de l'invention, le gain interne du détecteur et le gain électronique sont configurables de manière à permettre des mesures d'absorption et de fluorescence discriminantes pour une pluralité de populations cellulaires choisie parmi les basophiles, les lymphocytes, les monocytes, les neutrophiles, les éosinophiles, les globules rouges ou érythrocytes, les plaquettes, les érythroblastes, précurseurs des globules rouges, les réticulocytes et les plaquettes réticulées.

Cette caractéristique offre une latitude d'adaptation du dispositif à chaque mesure des différents types de cellules dont on souhaite faire une numération. Cette latitude permet de modifier la sensibilité du dispositif de détection et l'exploitation de la plage dynamique du traitement de données en fonction du type de cellules.

En particulier, avantageusement, le gain interne du détecteur et le gain électronique sont configurables de manière à permettre, avec le dispositif de détection, des mesures d'absorption et de fluorescence discriminantes pour chacun des cycles d'analyse.

Par cycles d'analyse on entend ici, chaque cycle d'utilisation du dispositif permettant la classification et le comptage absolu d'une famille de cellules présentes dans l'échantillon.

Cela correspond également au procédé faisant intervenir l'incubation de l'échantillon à analyser avec un réactif particulier ainsi que d'autres paramètres tels que la vitesse de passage des cellules dans la cuve de mesure par exemple. On peut ainsi réaliser, par exemple, cinq cycles d'analyse différents dans notre cas. Le cycle LMNE correspond au cycle d'analyse qui permettra la classification et le comptage précis des Lymphocytes, Monocytes, Neutrophiles et Eosinophiles. Le cycle GR/PLT permettra de compter en valeur absolue les érythrocytes et les plaquettes. Le cycle BASO permettra de mettre en évidence et de compter les basophiles. Le cycle RETIC permettra de mettre en évidence et de compter les réticulocytes, qui sont les précurseurs des globules rouges. Le cycle ERB permettra de compter les précurseurs de ces réticulocytes qui sont les érythroblastes.

Avantageusement, le gain interne du détecteur et le gain électronique sont configurables de manière à permettre, avec le dispositif de détection, des mesures d'absorption et de fluorescence discriminantes pour au moins les basophiles et les réticulocytes.

Cette caractéristique permet de couvrir le spectre des intensités lumineuses moyennes observées pour chacun des types de cellules évoqués ci-dessus. En effet, lors du cycle RETIC, on se trouve dans une situation où l'intensité lumineuse de fluorescence est la plus faible. Dans ces conditions, la sensibilité du détecteur doit être maximale. En revanche, les basophiles sont révélées par une mesure d'absorption dans une configuration où l'intensité lumineuse est la plus élevée. Lors du cycle BASO, la sensibilité du détecteur doit donc être minimale. En assurant la numération de ces deux types de cellules extrémales, on assure la possibilité de réglage du dispositif pour les autres types de cellules par modification du gain interne du détecteur et du gain électronique.

Selon une autre caractéristique additionnelle de l'invention, les deux sources peuvent être allumées simultanément afin d'obtenir des données à la fois biochimiques et morphométriques.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 est une vue en perspective d'un dispositif selon l'invention ;
- la figure 2 est une vue en coupe (XZ) du dispositif de la figure 1 ;
- la figure 3 est une vue en coupe (YZ) du dispositif de la figure 1 ;
- la figure 4 est une vue de dessus simplifiée du dispositif de la figure 1 ;

- la figure 5 représente le spectre d'excitation et de fluorescence du Thiazole Orange ;
- la figure 6 est un schéma du circuit électronique de commande relié au détecteur dans un mode de réalisation de l'invention ;
- la figure 7 représente la transmission passe haut du filtre optique coloré utilisé dans un mode de réalisation préférentiel de l'invention ;
- la figure 8 est une représentation des différents résultats que l'on peut obtenir avec le dispositif.

Description détaillée d'un mode de réalisation

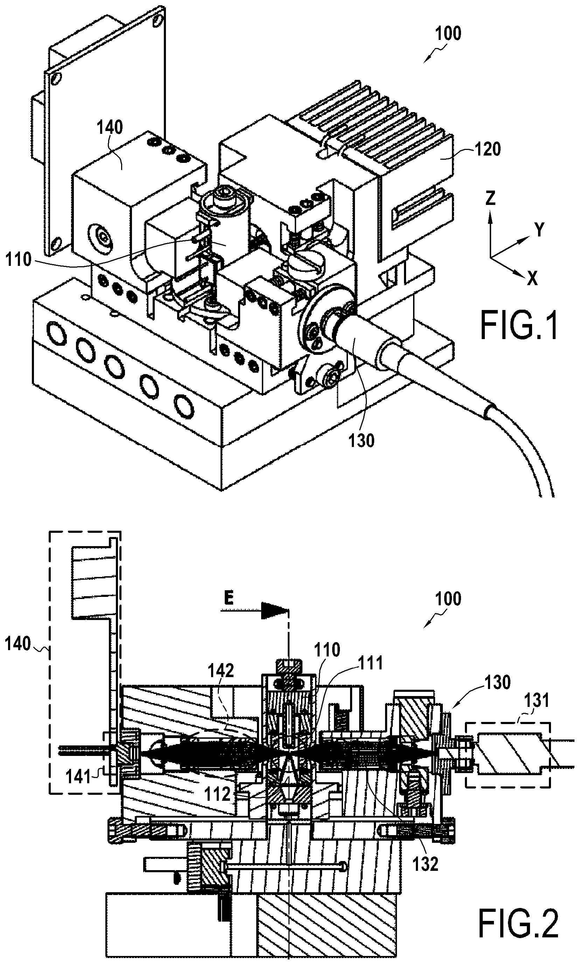

La figure 1 représente une perspective d'un mode de réalisation préférentiel d'un dispositif 100 selon l'invention. Ce dispositif 100 est composé de quatre ensembles fonctionnels : l'ensemble supportant la cuve de mesure 110, deux ensembles 120 et 130 supportant des sources de lumière et un ensemble supportant le détecteur de lumière 140. Dans le mode de réalisation présenté, les deux ensembles 120 et 130 supportant les sources de lumière sont perpendiculaires entre eux, l'un des deux faisant face à l'ensemble 140 portant le détecteur.

La figure 2 est une coupe du dispositif 100 selon le plan XZ passant par le plan de la mesure. L'ensemble 110 comprend une cuve de mesure 111 et une buse 112 débouchant dans la cuve de mesure 111 afin d'y générer le flux de fluide à analyser selon les principes de la cytométrie de flux. L'ensemble 130 comprend une source de lumière 131 ainsi que des éléments optiques 132 permettant une illumination adaptée de la cuve de mesure.

L'ensemble 140 comprend un détecteur 141 et des éléments optiques 142 permettant une réception adaptée de la lumière au niveau du détecteur 141. Les axes optiques des ensembles 130 et 140 sont perpendiculaires à la direction du flux.

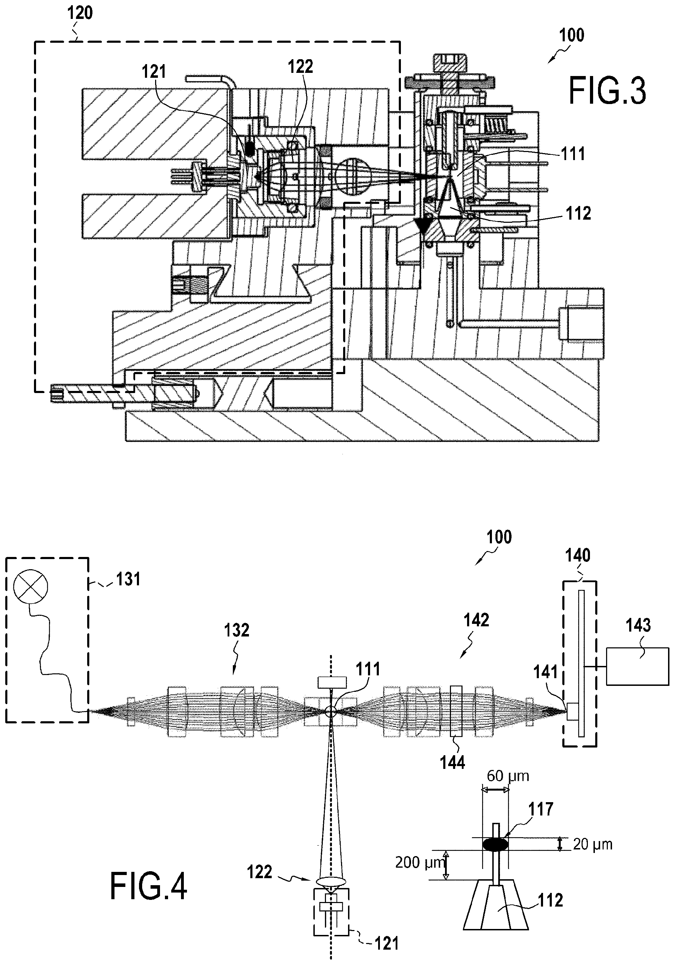

La figure 3 est une coupe du dispositif 100 selon le plan YZ passant par le plan de la mesure. L'ensemble 120 comprend une source de lumière 121 et des éléments optiques 122 permettant une illumination adaptée de la cuve de mesure.

On remarque ici encore que l'axe optique de l'ensemble 120 est perpendiculaire à la direction du flux de fluide. Les trois axes optiques des ensembles 120, 130 et 140 sont donc coplanaires et le flux de fluide dans la cuve de mesure 111 est perpendiculaire à ce plan commun.

La figure 4 représente une vue de dessus simplifiée du dispositif 100 sur laquelle la cuve de mesure 111 est schématiquement représentée ainsi que les sources 121, 131 et le détecteur 141.

Les deux sources 121 et 131 émettent à des longueurs d'onde distinctes et sont utiles pour deux types de mesures, une mesure d'absorption et une mesure de fluorescence. La mesure d'absorption est une mesure d'absorption apparente, somme des effets de diffraction, réfraction/réflexion et d'absorption vraie causée par la présence des cellules, et en particulier de cytochromes naturels ou artificiels de la cellule.

L'absorption apparente fait intervenir dans une large mesure les phénomènes de réfringence/diffraction cellulaire. Or pour la plupart des cellules, notamment la lignée granulocytaire, ce sont les granules, l'appréciation de leur taille et de leur nombre, de manière précise, qui contribuent à une analyse morphométrique de qualité.

Dans la suite un mode de réalisation permettant une mesure de fluorescence du Thiazole Orange et une mesure d'absorption est proposé de manière non limitative.

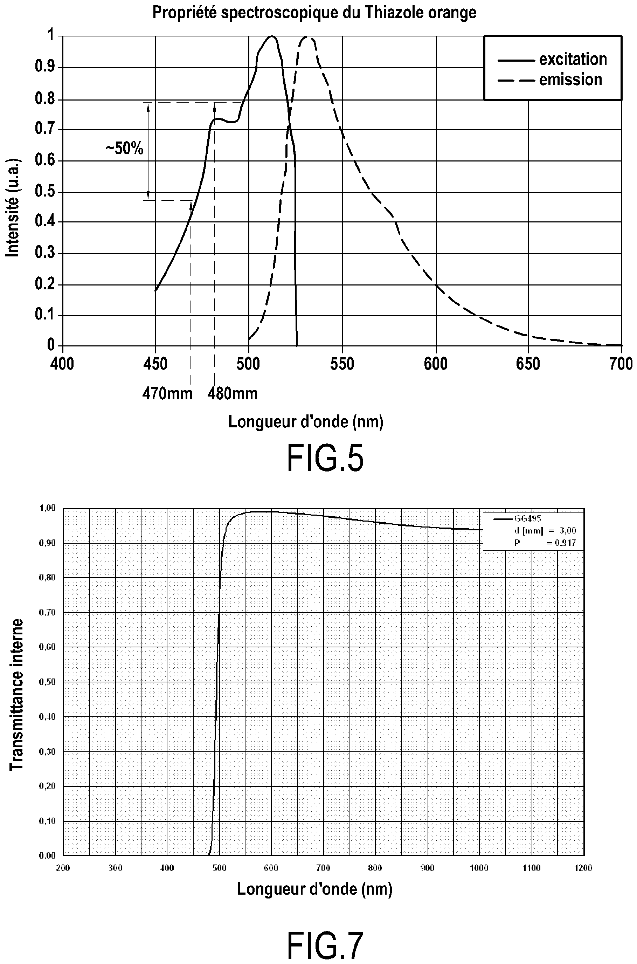

La figure 5 représente les propriétés spectroscopiques du Thiazole Orange. On voit que la longueur d'onde d'absorption maximale se situe autour de 510 nm. Néanmoins, cette longueur d'onde étant proche de la longueur d'onde de réémission qui se situe autour de 530 nm, il est préférable d'utiliser une source émettant préférentiellement au niveau du maximum secondaire situé vers 480 nm.

Dans une réalisation de l'invention, la source lumineuse 121 est une diode laser à 473 nm de 20 mW utilisée pour venir exciter les cellules marquées au Thiazole Orange circulant dans la cuve de mesure 111 du cytomètre de flux. La fluorescence émise par chacune de ces cellules, proportionnelle à la quantité d'acides nucléiques qui la constitue, est collectée à 90° sur l'axe optique du détecteur 141. Cette diode laser 121 est avantageusement régulée en courant, pour éviter les fluctuations de puissance lumineuse au cours du temps, et en température, pour avoir une stabilité au niveau de la longueur d'onde.

On sait par ailleurs que la divergence de la lumière émise par une diode laser 121 est très prononcée avec des angles de largeur à mi hauteur atteignant 40 degrés sur un axe et 10 degrés sur un autre axe perpendiculaire au premier.

Aussi, une optique de collimation spéciale est nécessaire pour remédier à la très grande divergence du faisceau émis par la diode laser 121. Pour ce faire, on utilise traditionnellement des lentilles asphériques moulées du fait de leur faible coût pour de grandes quantités. L'ouverture numérique de ces lentilles est en général au minimum de 0,5 pour collecter l'ensemble du faisceau laser émis. Le recours à ce type de lentille permet de former un faisceau collimaté à faible divergence. Le faisceau collimaté encore elliptique peut être rendu circulaire par une paire de prismes anamorphiques. Cette opération consiste à comprimer l'axe principal ou à étendre l'axe secondaire de façon à obtenir un faisceau circulaire. Il faut noter que ce procédé de compression de l'axe principal n'est pas nécessaire dans le dispositif selon l'invention puisque l'ellipticité de la diode laser 121 n'est pas gênante, au contraire, elle favorise la conformation du faisceau en fenêtre de capture elliptique 117 dont la taille est approximativement $20 \times 60 \ \mu m^2$ située à $200 \ \mu m$ de la sortie de la buse d'injection 112, figure 4.

La deuxième source lumineuse 131 émet avantageusement autour de 650 nm. Dans un mode de réalisation, il s'agit d'une diode du type RCLed (« Resonant Cavity Light Emitting Diode »).

Selon l'invention, le détecteur 141 est apte à collecter la fluorescence aussi bien que l'absorption. Ce détecteur est associé à une optique 142 elle-même mutualisée pour la fluorescence et l'absorption.

Afin de pouvoir modifier le gain du détecteur 141, celui-ci est relié à un circuit de commande électronique 143.

Dans le mode de réalisation présenté, le détecteur 141 est une photodiode à effet d'avalanche dont la polarisation est modifiée grâce au circuit de commande 143 afin de faire fonctionner la photodiode 141 selon les principes de l'invention.

Selon l'invention, le circuit de commande 143 permet d'inhiber le gain avalanche pour configurer la photodiode à effet d'avalanche en simple photodiode. La photodiode à effet d'avalanche présente alors un gain commutable. Ceci est un mode d'utilisation d'une diode à effet d'avalanche inédit et original.

L'intérêt de l'invention est de n'avoir qu'un seul dispositif de détection pour la caractérisation et le comptage des éléments figurés du sang. Un gain d'un point de vue coût est obtenu puisqu'on ne dédouble pas les voies de détection pour chaque mesure, celle d'absorbance et celle de fluorescence.

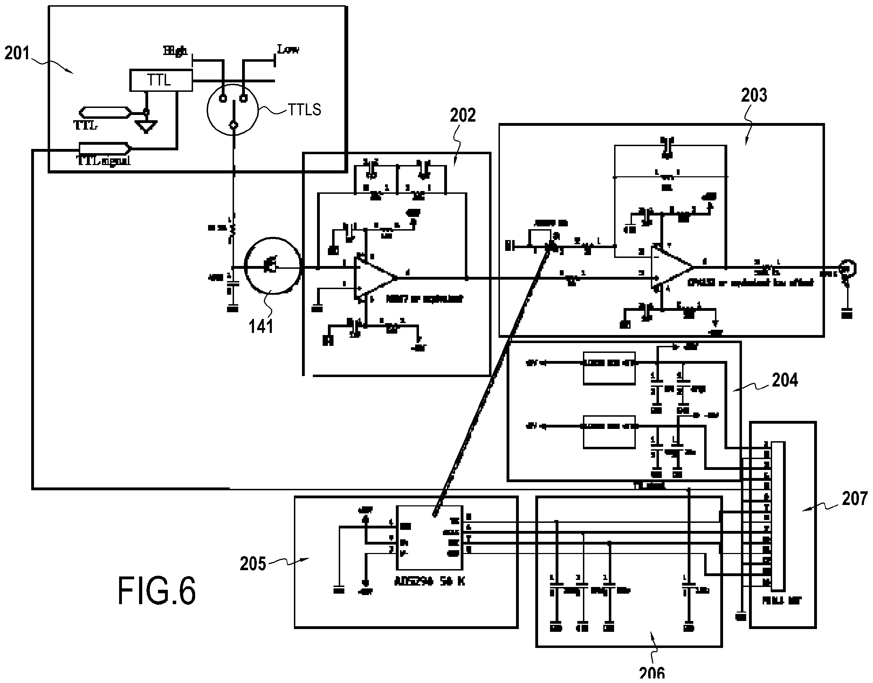

La figure 6 montre schématiquement, sous la forme d'un ensemble de divers blocs fonctionnels, la structure du circuit de commande 143 pour commander la photodiode 141. Ce circuit 143 présente une source de tension programmable capable de générer des basses et hautes tensions.

Dans le circuit 143, deux commandes digitales permettent de paramétrer la sensibilité et le gain de la détection par la photodiode 141 qui est par exemple du type Hamamatsu S5343.

Comme représenté par le bloc fonctionnel 201, le gain avalanche M est commandé par une commande digitale à 1 digit, notée TTLS et correspondant à un commutateur à deux positions. Ce gain, aussi dénommé gain interne, détermine la sensibilité du récepteur c'est à dire la plus petite quantité de photons détectable.

Lorsque TTLS = 1, la tension dite haute, par exemple égale à 150 Volts, permet de polariser la jonction en mode d'avalanche, conférant au détecteur un gain interne M supérieur à 1, par exemple M = 60, la sensibilité du détecteur est alors maximale, typiquement de 10 pico Watts.

En mode avalanche, la tension inverse est ajustée pour obtenir un gain compatible avec le(s) niveau(x) de fluorescence à détecter. Dans un mode de réalisation préféré, les tensions sont régulées autour de leur valeur nominale pour prendre en compte les variations de température de l'enceinte dans laquelle le composant 141 va fonctionner. Cette régulation de tension permet de stabiliser le gain à sa valeur nominale, typiquement de l'ordre de 60, dans une plage de températures données pouvant aller de 25°C à 40°C.

Lorsque TTLS = 0, la tension dite basse, par exemple 15 Volts, permet de polariser la jonction en mode photodiode, sans gain (M =1), la sensibilité du récepteur est de l'ordre de 1 nW.

Les tensions utilisées pour la polarisation pourront bien sûr varier en fonction de la diode utilisée. Pour le type de diode utilisée dans la présente réalisation, le choix d'une tension non nulle et inférieure à 30 Volts, tension pour laquelle commence à exister l'effet d'avalanche, est possible pour assurer un gain unitaire. En revanche, comme la capacité de jonction augmente très rapidement en dessous de 15 V, il sera préférable de choisir une tension qui ne sera pas substantiellement inférieure à cette valeur pour assurer le fonctionnement dans les intervalles de fréquences concernés.

En basse tension, typiquement de l'ordre de 10 à 20 Volts, la zone de charge d'espace a une faible extension au sein même de la jonction PN. Dans ces conditions, l'amplification par effet d'avalanche est substantiellement inhibée et le composant 141 fonctionne en simple photodiode.

La tension de polarisation adaptée à une valeur non nulle, dans le but de réduire la capacité électrique en pF de la jonction de la photodiode à une valeur suffisante, permet de conférer au détecteur 141 une bande passante compatible à la détection d'impulsions de lumière brèves, dont la durée est typiquement de 10 microsecondes. Cette tension doit néanmoins rester suffisamment faible pour éviter tout mécanisme d'amplification interne de la photodiode.

La diminution de la capacité de jonction est nécessaire pour conférer au détecteur une bande passante optimale compatible à l'analyse des signaux issus du système d'analyse. Ces signaux sont des trains d'impulsions aléatoires.

Le besoin de résolution temporelle et la nécessité d'analyser des signaux très peu déformés par le circuit de réception impose une bande passante Fp > Fco où Fco est la fréquence de coupure minimale permettant de ne pas déformer de manière appréciable une impulsion. Dans la pratique, Fco est par exemple égale à 350 kHz.

Dans ce mode de fonctionnement où l'effet d'avalanche est inhibé, le détecteur 141 est utilisé pour mesurer l'absorption apparente des cellules. Par exemple, l'hémoglobine est un cytochrome naturel des érythrocytes. L'éosine est un cytochrome artificiel pouvant être fixé par les leucocytes selon le procédé par exemple décrit dans le brevet EP 0 430 750.

Un autre mode de réalisation consisterait à utiliser un générateur de tension programmable ou commandé. La commande de type numérique ou analogique permettrait de contrôler la tension inverse appliquée à la photodiode 141 à effet d'avalanche, donc son gain interne, et donc la sensibilité du récepteur.

Pour le fonctionnement de la photodiode, quel que soit son mode de polarisation, celle-ci est couplée à un bloc amplificateur transimpédance 202 qui permet de convertir le photocourant en tension.

Dans une implémentation avantageuse, le gain transimpédance est égal à 300kΩ. La tension de sortie est de + /- 15 Volts afin de conférer une dynamique de sortie suffisante. En particulier, une grande dynamique est nécessaire à une mesure précise des signaux d'absorption.

En effet, une mesure d'absorption consiste à observer la perte de lumière δI sur une composante continue I. Si σ est la fraction de lumière perdue par absorption de la particule analysée, le signal d'analyse δI = σ I. Or dans le cas d'un récepteur limité par le bruit photoélectrique, le bruit est égal en valeur quadratique moyenne à b = $\sqrt{2qIB}$ où q est la charge de l'électron et B est la bande passante du circuit de réception.

Le rapport signal sur bruit est

$$\delta I \ / \ b = \sigma \ I \ / \ \sqrt{2qIB} = (\sigma / \sqrt{2qB}) \ \sqrt{I}.$$

Cette dernière formule indique que le rapport signal sur bruit augmente comme $\sqrt{I}$, d'où la nécessité d'utiliser la plus grande valeur de flux lumineux. Ce flux lumineux ne pourra toutefois pas être supérieur à une certaine valeur Î définie par la relation R η Î = Vs où R est le gain transimpédance, η est le rendement quantique du détecteur à la longueur d'onde d'illumination et Vs est la tension de saturation du premier amplificateur. Des valeurs typiques données à titre d'exemple, Vs = 12 V, R = 300 kΩ, η = 0,6 A/W à 650 nm, permettent de calculer Î = 67 μW. La limite de détection définie par le critère δI / b = 1 permet alors de déterminer la fraction $\sigma$ de lumière détectable :

$$\sigma = \sqrt{2qB}/\hat{I} = 4 \ . 10^{-5}.$$

La plus petite section efficace d'absorption que l'on peut détecter est alors égale à σ' = σx(axb) = 0,1 μm² ce qui est compatible avec la détection de petits éléments tels que les plaquettes. a et b étant respectivement la hauteur et la largeur de la fenêtre de mesure.

En mode avalanche, mode pour lequel la sensibilité est optimale, la sensibilité du circuit de réception est donnée par les caractéristiques de la photodiode, notamment la valeur NEP (Noise Equivalent Power) de l'ordre de 10 pico Watts, valeur obtenue en mode avalanche pour M=60.

Le bloc 203 conditionne le signal du premier étage 202 dans la plage du circuit situé en aval. Le bloc 203 permet d'ajuster les tensions à la plage dynamique d'entrée d'un convertisseur analogique-numérique ou d'un circuit de traitement. Le conditionnement du signal est obtenu en ajustant au mieux le gain de l'amplificateur. Il s'agit ici d'un amplificateur opérationnel non inverseur pour lequel le gain en boucle fermée est donné par la relation G = (1 + r /R) où r est la résistance de contre réaction et R la résistance équivalente de la branche située entre l'entrée non inverseuse et la masse. Le gain G est avantageusement variable dans un rapport 1:5. Ce gain permet d'augmenter encore la sensibilité de la détection de lumière.

On remarque ici que le résistor R est commandé de manière digitale ce qui est propice à un contrôle à distance à l'aide d'un micro contrôleur, par exemple le bloc 205 comprenant un composant programmable commercial AD5290 dans la réalisation représentée sur la figure 5. La position de ce résistor R n'est pas quelconque puisque cet agencement permet de conserver la bande passante du circuit.

Le bloc 204 comprend des alimentations en tension filtrées et régulées pour le fonctionnement du circuit de commande 143.

Dans le bloc 206 sont insérées des capacités de découplage permettant de filtrer les signaux parasites transportés par la ligne de commande.

Le bloc 207 est un connecteur électrique d'interface avec les lignes E/S.

Le tableau de valeurs de gains ci-dessous synthétise les valeurs de réglage des gains M et G utilisées pour l'analyse des divers types d'aliquotes contenus dans le sang :

| Cycle d'analyse | M | G |
|---|---|---|
| LMNE | 1 | 3 |
| GR/PLT | 1 | 5 |
| BASO | 1 | 2 |
| RETIC | 60 | 5 |
| ERB | 60 | 1 |

Dans la suite est décrite une séquence d'opérations, de cycles d'analyse, faite avec le dispositif selon l'invention et dans les conditions spécifiques, pour obtenir l'ensemble des populations évoquées auparavant.

De manière générale, pour une première mesure de fluorescence, on commute le gain APD en position « M = 60 », puis on allume la diode laser 121. La source lumineuse 131 est éteinte. Pour une mesure d'absorption, on commute le gain APD en position « M = 1 », puis on allume la RCLed. La diode laser est éteinte. Avantageusement, il est envisagé de déposer sur la fibre d'émission de la RCLed un filtre dichroïque qui réfléchira la fluorescence vers les canons de réception.

Le sang du patient est prélevé dans un tube sous EDTA. Cet échantillon de sang est ensuite divisé en plusieurs aliquotes qui vont être traitées différemment selon le réactif utilisé, permettant ainsi d'obtenir les résultats attendus.

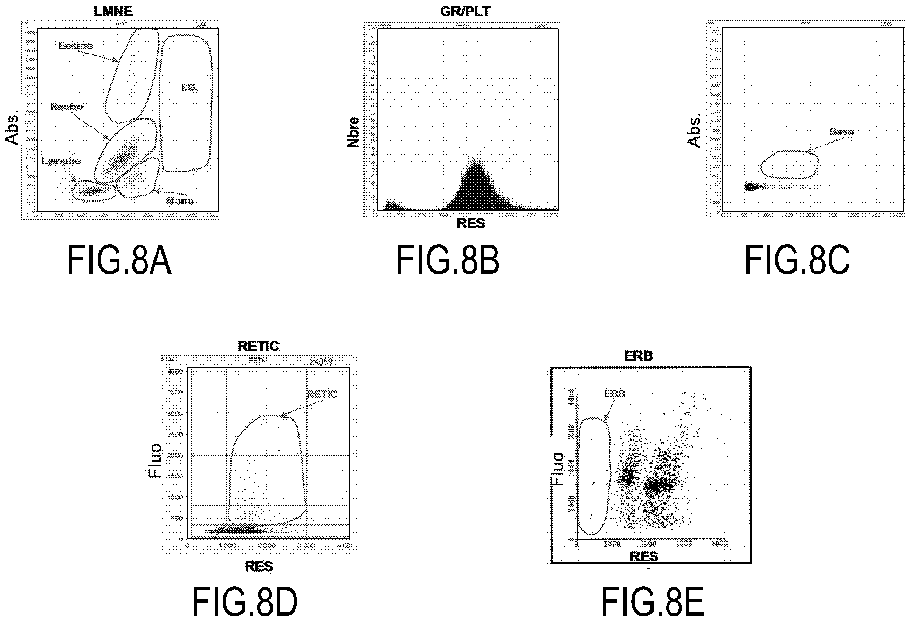

L'aliquote LMNE est une aliquote dans laquelle a été introduit un réactif tel que celui décrit par la demanderesse dans le brevet EP 1 239 283. Ce réactif est apte à lyser les globules rouges et permet la différenciation et la numération des lymphocytes, monocytes, neutrophiles et éosinophiles, grâce à une mesure d'absorption et d'impédance. Ici, ce sont 15 μL de sang qui sont mélangés à 1,8 mL du réactif. Le gain M de la photodiode est alors unitaire. Cela permet à la photodiode de rester quantitative pour cette mesure d'absorption. Le gain électronique de l'amplificateur opérationnel est avantageusement choisi légèrement supérieur à celui utilisé pour les basophiles, soit par exemple égal à 3. Les différentes populations cellulaires peuvent être représentées comme dans la figure 8a, dans laquelle on a fait figuré également l'emplacement des immatures granuleux éventuels.

L'aliquote GR/PLT est une aliquote dans laquelle a été introduit un réactif tel que celui décrit par la demanderesse dans le brevet EP 0 856 735. Ce réactif est apte à signer les globules rouges et les plaquettes grâce à une mesure d'absorption et d'impédance. 8 μl de sang sont mélangés à 2,8 mL de réactif. Le gain M de la photodiode est alors choisi unitaire pour, encore, rester quantitative pour la mesure d'absorption. Le gain électronique G de l'amplificateur opérationnel est avantageusement choisi supérieur à ceux utilisés pour les globules blancs, soit par exemple égal à 5. Le nombre de globules rouges et de plaquettes peut être représenté comme dans la figure 8b.

L'aliquote BASO est une aliquote dans laquelle a été introduit un réactif tel que celui décrit dans le brevet EP 1 039 297. Ce réactif est apte à signer les cellules basophiles grâce à une mesure d'absorption et d'impédance, car il réduit la taille volumétrique des leucocytes excepté celle des basophiles, ce qui permet leur différenciation et numération. 15 μL de sang sont donc ici mélangés à 1,8 mL du réactif. Le gain M de la photodiode est alors unitaire. Cela permet à la photodiode de rester quantitative pour cette mesure d'absorption. Le gain électronique G de l'amplificateur opérationnel est avantageusement choisi non unitaire mais faible, par exemple égal à 2. Les basophiles peuvent ainsi être représentés comme dans la figure 8c.

L'aliquote RET est une aliquote dans laquelle a été introduit un réactif tel que décrit dans le brevet EP 0 856 735, apte à signer les cellules réticulocytes grâce à une mesure de fluorescence. 2,4 μL de sang sont ici mélangés à 2,5 mL du réactif. Le gain M de la photodiode est alors choisi maximal, ici égal à 60, gain avalanche de la photodiode. Ici aussi, cela permet à la photodiode d'être suffisamment sensible pour cette mesure de fluorescence. Comme les quantités de lumière attendues sont faibles, le gain électronique G de l'amplificateur opérationnel est avantageusement choisi maximal, ici égal à 5. Les réticulocytes sont représentés par exemple comme dans la figure 8d. Cette possibilité de mesure des réticulocytes fait tout l'intérêt de l'invention car cette mesure est une réelle valeur ajoutée pour l'analyse sanguine. Cette mesure est accessible avec une bonne fiabilité à moindre cout grâce à l'invention. De plus, plus le réticulocyte est jeune, plus la quantité d'ARN est importante.

Puisque le Thiazole Orange réagit de manière statistiquement stoechiométrique avec les bases des acides nucléiques, l'intensité de la fluorescence est d'autant plus élevée que le réticulocyte est jeune. Le dispositif décrit dans l'invention, et le procédé associé permettent donc, de manière simple et peu coûteuse, de classifier et quantifier les réticulocytes, mais aussi de donner une indication sur la maturité de ces cellules.

L'aliquote ERB est une aliquote dans laquelle a été introduit un réactif tel que décrit dans le brevet EP 1 239 283, apte à signer les cellules érythroblastes, précurseurs des réticulocytes, grâce à une mesure de fluorescence. L'échantillon analysé est préparé en mélangeant 30 μL de sang à 2 mL de réactif. Le gain M de la photodiode est alors choisi maximal, ici égal à 60, gain avalanche de la photodiode. Cela permet à la photodiode d'être suffisamment sensible pour cette mesure de fluorescence. Le gain électronique G de l'amplificateur opérationnel est par exemple choisi unitaire. Cette valeur permet d'accéder à une quantification correcte de la fluorescence dans la plage dynamique offerte dans le traitement ultérieur des données. Les érythroblastes peuvent être représentés comme dans la figure 8e.

Pour chacune des aliquotes obtenues avec le réactif adéquat, une double mesure - fluorescence et impédance, ou absorbance et impédance - telle qu'autorisée par l'invention est effectuée. Cela permet d'obtenir la classification et le comptage des populations cellulaires évoquées auparavant, de façon spécifique et sensible, à savoir les érythrocytes, les réticulocytes, les érythroblastes, les plaquettes, les plaquettes réticulées, les leucocytes parmi lesquels plusieurs catégories identifiables avec l'invention telles que les lymphocytes, les monocytes, les neutrophiles, les éosinophiles et les basophiles. Ainsi, avec l'invention, dix populations cellulaires sont aisément identifiables et peuvent être quantifiées à partir des cinq aliquotes décrites précédemment. En effet, les mesures de fluorescence et d'absorption, associées aux mesures d'impédance, pour chacun des mélanges préparés ci-dessus permettent de différencier ces populations. Il est possible, avec l'invention, d'accéder à la numération d'autres types cellulaires, dont les précurseurs des leucocytes, monoblastes et lymphoblastes, ou encore les immatures granuleux.

Au devant du détecteur proprement dit, ici constitué par la photodiode, le système optique de réception est composé de doublets achromatiques. Cette ouverture est suffisante pour permettre la détection des signaux de fluorescence provenant du Thiazole Orange couplé aux acides nucléiques tels que ceux contenus dans les réticulocytes.

Les longueurs d'onde d'achromatisation sont centrées sur les longueurs d'onde d'intérêt. Dans un mode de réalisation particulier, l'absorption de la cellule est réalisée à 650 nm. Dans le cas de l'utilisation du Thiazole Orange, l'émission de fluorescence est maximum à la longueur d'onde de 530 nm. Un doublet optimisé aux longueurs d'onde de 530 et 650 nm permet une mise au point optique optimale (focus) sur le flux cellulaire à ces deux longueurs d'onde.

Aussi, afin de pouvoir détecter correctement la quantité de lumière aux deux longueurs d'ondes de fluorescence et d'absorption, le système optique 142 est corrigé de l'aberration chromatique à 530 nm, longueur d'onde de la fluorescence, et à 650 nm, longueur d'onde d'absorption.

Un filtre absorbant 144 de type GG495 par exemple de chez Schott, dont l'épaisseur est de l'ordre de 3 mm, est installé dans le canon de réception, dans la partie du montage où le faisceau de lumière est parallèle. Ce filtre 144 permet d'absorber la lumière laser diffractée à angle droit du faisceau laser.

La figure 7 représente la transmission passe-haut d'un tel filtre 144. On voit bien qu'en émettant autour de 470 nm au lieu des 488 nm, longueur d'onde du maximum secondaire d'absorption du Thiazole Orange, on autorise l'utilisation d'un tel filtre bon marché et simple d'utilisation 144 mais qui commence à laisser une intensité lumineuse passer vers 480 nm. Il s'agit en effet d'un simple verre coloré et les verres colorés efficaces sont rares sur le spectre de la lumière. Il est bien entendu possible de mettre en oeuvre l'invention en travaillant à 488 nm, mais cela entraîne (au moins de nos jours) des coûts supplémentaires.

Ainsi, dans le cas d'une émission autour de 488 nm, l'utilisation d'un autre type de verre (tel que le GG510 ou OG 515) serait souhaitable pour éviter la diffraction aux grands angles en direction du dispositif de détection. En excitant le Thiazole Orange autour de 470 nm, on a remarqué, dans le dispositif selon l'invention, que l'on obtient un rendement lumineux efficace mais plus faible qu'à 488 nm tout en utilisant un verre coloré peu coûteux ce qui est très avantageux.

Cette caractéristique autorise encore la baisse des coûts de l'installation d'une mesure de fluorescence dans le dispositif selon l'invention. Ce filtre 144 est traité antireflets large bande, soit entre 400 nm et 700 nm, pour réduire la réflexion de Fresnel.

La raie 473 nm de la diode laser 121 est totalement absorbée par le filtre. Seule la fluorescence dont la bande d'émission est située entre 500 nm et 600 nm ainsi que la raie 650 nm de la source lumineuse 131 sont transmises.

L'optique est ici avantageusement corrigée des aberrations du troisième ordre, notamment pour corriger les aberrations géométriques et chromatiques introduites par les dioptres plans, d'eau et de verre, de la chambre de mesure 111.

En définitive, le dispositif présenté permet de former l'image du flux cellulaire sur la pupille du détecteur 141. Dans ce plan, la résolution optique est donnée par la formule :

$$R = \lambda/(ONe+ONr)$$

où $\lambda$ est la longueur d'onde d'illumination, ONe et ONr sont respectivement les ouvertures numériques des faisceaux d'éclairage et de réception.

Bien que la mesure réalisée dans le plan image soit purement photométrique, la sensibilité du détecteur 141, sa capacité à discriminer deux cellules différenciées par leurs hétérogénéités, sont grandement liées au paramètre R, notamment le rapport signal sur bruit de la mesure.

Pour une différentiation leucocytaire optimale, et à la longueur d'onde de 0,65 $\mu$m, il a pu être observé que le paramètre R devait être inférieur ou égal à 1 $\mu$m. Cela impose des contraintes sur les ouvertures numériques ONe + ONr > 0,65. Dans un mode de réalisation, les ouvertures d'émission et de réception sont égales et avantageusement ONe=ONr $\geq$ 0,325. Dans un exemple avantageux de réalisation, cette ouverture est fixée à 0,35.

Enfin, le spectre d'absorption de la peroxydase, une enzyme présente dans les éosinophiles et qui absorbe à 650 nm, contribue à améliorer la séparation avec les neutrophiles. L'invention permet, dans ce sens, une amélioration sensible de la séparation neutrophiles/éosinophiles par rapport aux dispositifs précédemment développés.

Il est bien entendu que le dispositif peut tout à fait être mis en oeuvre avec d'autres réactifs, permettant d'obtenir des résultats similaires, avec des procédés relativement différents. D'autres réactifs peuvent aussi être développés pour la différenciation et la numération d'autres types cellulaires tels que les lymphocytes T, B ou NK. Dans ces cas, le réactif pourra comporter une sonde immunologique composée d'une molécule ou particule fluorescente chimiquement couplée à un anticorps. Notons que la formulation du réactif doit être telle, qu'elle doit permettre une différenciation bi-paramétrique comme évoqué précédemment.

On remarque enfin que diverses mises en oeuvre peuvent être réalisées selon les principes de l'invention. En particulier, les deux sources lumineuses peuvent être allumées en même temps pour déterminer simultanément des propriétés biochimiques et morphométriques. Malgré le caractère séquentiel des mesures effectuées grâce à l'invention, elle revêt des avantages économiques et médicaux certains en autorisant une mesure de fluorescence dans des dispositifs à bas coûts qui, jusqu'à présent, ne permettaient que des mesures d'absorption et donc la seule détermination des populations accessibles par de telles mesures.

**Revendications**

1. Dispositif d'analyse biologique (100) par mesures électro-optiques dans un fluide présent dans une cuve de mesure (111), ce dispositif (100) comprenant au moins deux sources lumineuses (121,131) aptes à émettre dans des zones spectrales différentes convenant pour la réalisation de mesures, respectivement, d'absorption et de fluorescence, un dispositif de mesure d'impédance associé à chaque mesure d'absorption et de fluorescence, et un dispositif de détection (140), comprenant un détecteur (141), un système optique (142) et des moyens de filtrages (144), ces trois derniers éléments étant mutualisés pour permettre la mesure des signaux d'absorption et/ou de fluorescence, le détecteur (141) étant configurable en gain interne afin de permettre la réalisation des mesures de fluorescence et les mesures d'absorption de manière séquentielle.

2. Dispositif selon la revendication 1, **caractérisé en ce que** le détecteur (141) est une photodiode à effet d'avalanche connectée à un circuit de polarisation (143) apte à inhiber le gain interne d'avalanche.

3. Dispositif selon la revendication 2, **caractérisé en ce que** le gain interne inhibé est unitaire, la photodiode à effet d'avalanche (141) se comportant alors comme une simple photodiode.

4. Dispositif selon l'une des revendications 2 et 3, **caractérisé en ce que** le circuit de polarisation (143) comprend un commutateur à deux positions sur lesquelles sont fournies deux tensions distinctes, une haute et une basse, et commandé par une commande électrique afin de fournir la haute tension ou la basse tension pour la polarisation de la photodiode (141).

5. Dispositif selon l'une des revendications 2 et 3, **caractérisé en ce que** le circuit de polarisation (143) comprend un générateur de tension programmable piloté par une commande de type numérique ou analogique pour contrôler la tension de polarisation appliquée par ce générateur à la photodiode à effet d'avalanche.

6. Dispositif selon l'une des revendications précédentes, **caractérisé en ce que** les deux sources de lumière (121, 131) présentent des axes optiques d'émission coplanaires avec l'axe optique du détecteur de lumière (141).

7. Dispositif selon la revendication 6, **caractérisé en ce que** l'axe optique de la source de lumière (131) émettant aux longueurs d'onde d'absorption est aligné avec celui du détecteur de lumière (141) et l'axe optique de la source de lumière d'excitation de la fluorescence (121) est perpendiculaire aux axes optiques du détecteur (141) et de l'autre source de lumière (131).

8. Dispositif selon l'une des revendications précédentes, **caractérisé en ce que** le détecteur (141) est relié à un étage d'amplification électronique (203) à gain électronique variable en fonction de la mesure effectuée.

9. Dispositif selon la revendication 8, **caractérisé en ce que** le gain interne du détecteur (141) et le gain électronique sont configurables de manière à permettre des mesures d'absorption et de fluorescence discriminantes pour une pluralité de populations cellulaires choisies au moins parmi les basophiles, les lymphocytes, les monocytes, les neutrophiles, les éosinophiles, les érythrocytes, les plaquettes, les érythroblastes, les réticulocytes, et les plaquettes réticulées.

10. Dispositif selon la revendication 8, **caractérisé en ce que** le gain interne du détecteur (141) et le gain électronique sont configurables de manière à permettre, avec le dispositif de détection, des mesures d'absorption et de fluorescence discriminantes pour chaque cycle d'analyse, un cycle permettant la classification et le comptage absolu d'une famille de cellules présentes dans l'échantillon.

11. Dispositif selon la revendication 10, **caractérisé en ce que** le gain interne du détecteur (141) et le gain électronique sont configurables de manière à permettre, avec le dispositif de détection, des mesures d'absorption et de fluorescence discriminantes pour au moins les cycles d'analyse des basophiles et des réticulocytes.

12. Dispositif selon l'une des revendications précédentes, **caractérisé en ce que**, le marqueur utilisé pour la fluorescence étant le Thiazole Orange, la source d'excitation de la fluorescence émet autour de 470 nm et **en ce que** les moyens de filtrage du dispositif de détection comprennent un filtre du type verre coloré dont la longueur d'onde de coupure est située au voisinage de 495 nm.

13. Dispositif selon l'une des revendications précédentes, **caractérisé en ce que** les deux sources (121, 131) peuvent être allumées simultanément afin d'obtenir des données à la fois biochimiques et morphométriques.

14. Procédé d'utilisation du dispositif selon l'une quelconque des revendications précédentes pour la classification et le comptage des populations cellulaires présentes dans l'échantillon biologique.

**Patentansprüche**

1. Vorrichtung zur biologischen Analyse (100) durch elektrooptische Messungen in einem Fluid, das in einem Messbehälter (111) vorhanden ist, wobei die Vorrichtung (100) mindestens zwei Lichtquellen (121, 131), die geeignet sind, in verschiedenen Spektralbereichen zu emittieren, die zum Durchführen jeweils von Absorptions- und Fluoreszenzmessungen geeignet sind, eine Vorrichtung zur Messung der Impedanz, die mit jeder Absorptions- und Fluoreszenzmessung verbunden ist, und eine Detektionsvorrichtung (140) aufweist, die einen Detektor (141), ein optisches System (142) und Filtermittel (144) aufweist, wobei diese letzten drei Elemente gebündelt sind, um das Messen der Absorptions- und / oder Fluoreszenzsignale zu ermöglichen, wobei die interne Verstärkung des Detektors (141) konfigurierbar ist, um das Durchführen der Absorptions- und Fluoreszenzmessungen nacheinander zu ermöglichen.

2. Vorrichtung gemäß Anspruch 1, **dadurch gekennzeichnet, dass** der Detektor (141) eine Lawinenphotodiode ist, die an eine Vorspannungsschaltung (143) angeschlossen ist, die geeignet ist, die interne Lawinenverstärkung zu hemmen.

3. Vorrichtung gemäß Anspruch 2, **dadurch gekennzeichnet, dass** die gehemmte interne Verstärkung eine Einheitsverstärkung ist, wobei sich die Lawinenphotodiode (141) dann wie eine einfache Photodiode verhält.

4. Vorrichtung gemäß einem der Ansprüche 2 und 3, **dadurch gekennzeichnet, dass** die Vorspannungsschaltung (143) einen Umschalter mit zwei Positionen aufweist, an denen zwei verschiedene Spannungen, eine hohe und eine niedrige, bereitgestellt werden, und die durch eine elektrische Steuerung gesteuert wird, um die hohe Spannung oder die niedrige Spannung für die Polarisation der Photodiode (141) bereitzustellen.

5. Vorrichtung gemäß einem der Ansprüche 2 und 3, **dadurch gekennzeichnet, dass** die Vorspannungsschaltung (143) einen programmierbaren Spannungsgenerator aufweist, der durch eine analoge oder digitale Steuerung gesteuert wird, um die Polarisationsspannung zu regeln, die von dem Generator an die Lawinenphotodiode angelegt wird.

6. Vorrichtung gemäß einem der vorhergehenden Ansprüche, **dadurch gekennzeichnet, dass** die zwei Lichtquellen (121, 131) optische Emissionsachsen aufweisen, die mit der optischen Achse des Lichtdetektors (141) koplanar sind.

7. Vorrichtung gemäß Anspruch 6, **dadurch gekennzeichnet, dass** die optische Achse der Lichtquelle (131), die bei Absorptionswellenlängen emittiert, mit jener des Lichtdetektors (141) ausgerichtet ist und die optische Achse der Fluoreszenz-Erregerlichtquelle (121) senkrecht zu der optischen Achse des Lichtdetektors (141) und der optischen Achse der anderen Lichtquelle (131) ist.

8. Vorrichtung gemäß einem der vorhergehenden Ansprüche, **dadurch gekennzeichnet, dass** der Detektor (141) an eine elektronische Verstärkungsstufe (203) mit elektronischer Verstärkung, die in Abhängigkeit von der durchgeführten Messung variabel ist, angeschlossen ist.

9. Vorrichtung gemäß Anspruch 8, **dadurch gekennzeichnet, dass** die interne Verstärkung des Detektors (141) und die elektronische Verstärkung dazu konfigurierbar sind, diskriminierende Absorptions- und Fluoreszenzmessungen für mehrere Zellpopulationen zu ermöglichen, die mindestens ausgewählt sind aus den Basophilen, den Lymphozyten, den Monozyten, Neutrophilen, den Eosinophilen, den Erythrozyten, den Blutplättchen, den Erythroblasten, den Retikulozyten und den vernetzten Blutplättchen.

10. Vorrichtung gemäß Anspruch 8, **dadurch gekennzeichnet, dass** die interne Verstärkung des Detektors (141) und die elektronische Verstärkung dazu konfigurierbar sind, mit der Detektionsvorrichtung diskriminierende Absorptions- und Fluoreszenzmessungen für jeden Analysezyklus zu ermöglichen, wobei ein Zyklus das Klassifizieren und das absolute Zählen einer Familie von Zellen, die in der Probe vorhanden sind, ermöglicht.

11. Vorrichtung gemäß Anspruch 10, **dadurch gekennzeichnet, dass** die interne Verstärkung des Detektors (141) und die elektronische Verstärkung derart konfigurierbar sind, um mit der Detektionsvorrichtung diskriminierende Absorptions- und Fluoreszenzmessungen für mindestens die Analysezyklen der Basophile und der Retikulozyten zu ermöglichen.

12. Vorrichtung gemäß einem der vorhergehenden Ansprüche, **dadurch gekennzeichnet, dass**, wobei der Marker, der für die Fluoreszenz verwendet wird, Thiazolorange ist, die Fluoreszenz-Erregerlichtquelle etwa 470 nm emittiert und dass die Filtermittel der Detektionsvorrichtung einen gefärbten Glasfilter aufweisen, dessen Grenzwellenlänge in der Nähe von 495 nm liegt.

13. Vorrichtung gemäß einem der vorhergehenden Ansprüche, **dadurch gekennzeichnet, dass** die zwei Quellen (121, 131) zugleich eingeschaltet werden können, um gleichzeitig biochemische und morphometrische Daten zu erhalten.

14. Verfahren zur Verwendung einer Vorrichtung gemäß einem der vorhergehenden Ansprüche für das Klassifizieren und das Zählen der Zellpopulationen, die in der biologischen Probe vorhanden sind.

**Claims**

1. A device (100) for biological analysis by electro-optical measurements on a fluid in a measurement tank (111), this device (100) comprising at least two light sources (121, 131) adapted to emit in different spectral areas respectively appropriate for measurement of absorption and fluorescence, a device for measuring the impedance associated with each absorption and fluorescence measurement, and a shared sensor device (140) comprising a sensor (141), an optical system (142), and filter means (144), which three elements are mutualized to enable absorption and/or fluorescence to be measured, the internal gain of the sensor (141) being configurable to enable the fluorescence and absorption measurements to be executed sequentially.

2. A device according to claim 1, **characterized in that** the sensor (141) is an avalanche photodiode connected to a bias circuit (143) adapted to inhibit the internal avalanche gain.

3. A device according to claim 2, **characterized in that** the inhibited internal gain is 1, the avalanche photodiode (141) behaving as a simple photodiode.

4. A device according to claim 2 or claim 3, **characterized in that** the bias circuit (143) comprises a two-position switch providing two different voltages, a high voltage and a low voltage, and electrically controlled to provide the high voltage or the low voltage for biasing the photodiode (141).

5. A device according to claim 2 or claim 3, **characterized in that** the bias circuit (143) comprises a programmable voltage generator controlled by digital or analog means to control the bias voltage applied by this generator to the avalanche photodiode.

6. A device according to any one of the preceding claims, **characterized in that** the two light sources (121, 131) have emission optical axes coplanar with the optical axis of the light sensor (141).

7. A device according to claim 6, **characterized in that** the optical axis of the light source (131) emitting at the absorption wavelengths is aligned with that of the light sensor (141) and the optical axis of the light source for exciting fluorescence (121) is perpendicular to the optical axes of the sensor (141) and the other light source (131).

8. A device according to any one of preceding claims, **characterized in that** the sensor (141) is connected to an electronic amplification stage (203) with electronic gain variable as a function of the measurement effected.

9. A device according to claim 8, **characterized in that** the internal gain of the sensor (141) and the electronic gain are configurable to enable discriminating absorption and fluorescence measurements for a plurality of cell populations chosen from at least basophils, lymphocytes, monocytes, neutrophils, eosinophils, erythrocytes, platelets, erythroblasts, reticulocytes, and reticulated platelets.

10. A device according to claim 8, **characterized in that** the internal gain of the sensor (141) and the electronic gain are configurable to enable, with the sensor device, discriminating absorption and fluorescence measurements for each analysis cycle, a cycle enabling the classification and the absolute counting of a family of cells present in the sample.

11. A device according to claim 10, **characterized in that** the internal gain of the sensor (141) and the electronic gain are configurable to enable, with the sensor device, discriminating absorption and fluorescence measurements for at least the analysis cycles of basophils and reticulocytes.

12. A device according to any one of the preceding claims, **characterized in that** the fluorescence marker used being Thiazole Orange the fluorescence excitation source emits at around 470 nm and the filter means of the sensor device comprise a colored glass-type filter of cut-off wavelength situated in the vicinity of 495 nm.

13. A device according to any one of the preceding claims, **characterized in that** the two sources (121, 131) may be turned on simultaneously to obtain biochemical and morphometric data.

14. A method of using the device according to any one of the preceding claims for classifying and counting cell populations present in the biological sample.

FIG.1

FIG.2

FIG.3

FIG.4

Propriété spectroscopique du Thiazole orange

FIG.5

FIG.7

FIG.6

FIG.8A

FIG.8B

FIG.8C

FIG.8D

FIG.8E

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5138181 A
- WO 2006053960 A
- US 20060219873 A
- EP 1710558 A
- EP 0533333 A
- WO 2008019448 A
- EP 0806664 A
- US 4745285 A

- US 5408307 A
- US 6897954 B
- WO 2006086382 A2
- EP 0430750 A
- EP 1239283 A
- EP 0856735 A
- EP 1039297 A